# EUROPÄISCHE PATENTSCHRIFT

(11) **EP 2 691 660 B1**
(45) Veröffentlichungstag und Bekanntmachung des Hinweises auf die Patenterteilung: **27.07.2016**
(21) Anmeldenummer: 12721710.7
(22) Anmeldetag: 22.03.2012
(51) Int. Cl.: F16B 19/06, B21J 15/02

(54) **KRAFTFAHRZEUGTÜRSCHLOSS**
MOTOR VEHICLE DOOR LOCK
SERRURE DE PORTIÈRE DE VÉHICULE À MOTEUR

(30) Priorität: 26.03.2011 DE 202011004407 U
(43) Veröffentlichungstag der Anmeldung: 05.02.2014
(73) Patentinhaber: Kiekert Aktiengesellschaft, 42579 Heiligenhaus (DE)
(72) Erfinder: WALDMANN, Thomas, 45468 Mülheim (DE); AKKERMANN, Steffen, 26802 Moormerland (DE); WANG, Jianfeng, 40883 Ratingen (DE)
(86) Internationale Anmeldenummer: PCT/DE2012/000307
(87) Internationale Veröffentlichungsnummer: WO 2012/130218

(56) Entgegenhaltungen:
- DE-A1- 2 250 452
- FR-A1- 2 852 347
- FR-A5- 2 074 927
- GB-A- 2 302 129
- JP-U- 61 098 166

## Beschreibung

Die Erfindung betrifft ein Kraftfahrzeugtürschloss, mit einem Schlossgehäuse, und mit wenigstens einem im Schlossgehäuse gelagerten Hebel, wobei zur Lagerung des Hebels zumindest eine im Schlossgehäuse verankerte Achse vorgesehen ist.

Im Allgemeinen ist das Schlossgehäuse zweiteilig mit Kunststoffhaube und metallischem Schlosskasten ausgerüstet. In diesem Fall handelt es sich bei dem Hebel um einen Gesperrehebel bzw. ein Gesperreelement, beispielsweise eine Drehfalle und/oder eine Sperrklinke. Die zugehörige Drehfallenachse und/oder Sperrklinkenachse ist in dem Schlosskasten verankert. So geht beispielsweise der gattungsbildende Stand der Technik nach der DE 10 2009 029 025 A1 oder auch entsprechend der US 3 371 948 vor.

Tatsächlich lässt die US 3 371 948 einen metallischen Schlosskasten erkennen, in welchen ein Dorn als Drehfallenachse eingenietet ist. Im Bereich des Dornes findet sich eine Sicke im Schlosskasten. Vergleichbar wird im aus der Praxis bekannten Stand der Technik vorgegangen.

Kraftfahrzeugtürschlösser und hier insbesondere die meistens massiv und aus Metall ausgelegten Sperrelemente bzw. Sperrteile, d. h. die Bestandteile des Gesperres und auch der Schlosskasten, sind erheblichen Kräften ausgesetzt. Das gilt insbesondere beim Auftreten erhöhter Verformungen der Karosserie, wie sie in Unfall- bzw. Crashsituationen beobachtet werden, wobei die Fahrgastzelle möglichst unverformt bleiben soll. Bei solchen Vorgängen kommt es darauf an, eine unbeabsichtigte Öffnung einer zugehörigen Kraftfahrzeugtür zu verhindern. Allgemein sollen schlagartige Stoßbeanspruchungen beherrscht werden.

Die FR 2 852 347 A1 offenbart ein Kraftfahrzeugschloss, mit einem Schlossgehäuse, und mit wenigstens einem im Schlossgehäuse gelagerten Hebel, wobei zur Lagerung des Hebels zumindest eine im Schlossgehäuse verankerte Achse vorgesehen ist, wobei das Schlossgehäuse und die Achse korrespondierende sowie ineinandergreifende Winkelkonturen aufweisen. Vergleichbare Lösungen sind auch aus der JP 61 098166 U, der GB 2 302 129 A, der FR 2 074 927 A5 und der DE 22 50 452 bekannt.

Aus diesem Grund schlägt die DE 10 2009 029 025 A1 vor, dass das Gesperre zusätzlich wenigstens ein Mittel zur Kraftübertragung auf den Schlosskasten umfasst. Hierbei handelt es sich in der Regel um einen Riegel, welcher zusätzlich einen Anschlag für die Drehfalle darstellt. Der Riegel sorgt dafür, dass eine Drehbewegung der Drehfalle von einer Offenstellung ausgehend über die Hauptrastposition hinaus begrenzt wird. Das hat sich prinzipiell bewährt, ist allerdings mechanisch aufwendig und erfordert wenigstens ein zusätzliches Bauteil in Gestalt des angesprochenen Riegels. Daraus resultieren Kostennachteile. Hier setzt die Erfindung ein.

Der Erfindung liegt das technische Problem zugrunde, ein gattungsgemäßes Kraftfahrzeugtürschloss so weiter zu entwickeln, dass einerseits besonders hohe Beanspruchungen und insbesondere schlagartige Stoßbeanspruchungen zuverlässig aufgenommen werden und dies andererseits unter Berücksichtigung eines kostenoptimierten Aufbaus gelingt.

Zur Lösung dieser technischen Problemstellung ist ein gattungsgemäßes Kraftfahrzeugtürschloss im Rahmen der Erfindung dadurch gekennzeichnet, dass das Schlossgehäuse die Merkmale des Patentanspruchs 1 aufweist.

D. h., die Erfindung ist ausdrücklich nicht auf ein Gesperre und dessen Sperrteile oder Sperrelemente wie Drehfalle und Sperrklinke und den zugehörigen Schlosskasten zur Lagerung des Gesperres gemünzt. Vielmehr kann mit Hilfe der erfindungsgemäßen Lagerung des Hebels generell jeder im Schlossgehäuse gelagerte Hebel derart ertüchtigt werden, dass erhöhte Beanspruchungen und insbesondere Stoßbeanspruchungen vorteilhaft und zuverlässig beherrscht werden. Das alles gelingt unter Berücksichtigung eines besonders kostengünstigen Aufbaus, weil das Schlossgehäuse und die Achse des Hebels mit den korrespondierenden sowie ineinandergreifenden Winkelkonturen ausgerüstet werden.

Besagte Winkelkonturen am Schlossgehäuse bzw. der Achse lassen sich problemlos herstellen, ohne dass aufwendige Zusatzelemente, weitere Verfahrensschritte bei der Herstellung etc. erforderlich wären. Vielmehr werden die ineinandergreifenden Winkelkonturen bzw. deren Herstellung in den herkömmlichen Produktionsprozess integriert, der meistens ohnehin und von vornherein schon ineinandergreifende Konturen - allerdings ohne Winkel - vorgesehen hat.

Hierzu ist das Schlossgehäuse im Detail mit einer Durchgriffsöffnung für die Achse ausgerüstet. Die Durchgriffsöffnung wird von einer Stufenkontur umringt. Die die Durchgriffsöffnung umringende Stufenkontur im Schlossgehäuse greift in eine zugehörige Stufennut in der Achse ein. Üblicherweise sind die Stufenkontur, die Durchgriffsöffnung und die Stufennut ebenso wie die Achse zur Lagerung des Hebels jeweils rotationssymmetrisch ausgebildet, und zwar im Vergleich zu einer gemeinsamen Rotationssymmetrieachse.

Die Stufenkontur im Schlossgehäuse setzt sich erfindungsgemäß im Detail aus einer radial äußeren Basiskontur und zumindest einer radial inneren Vorsprungkontur zusammen. Grundsätzlich können auch mehrere radial aneinander anschließende Vorsprungkonturen vorgesehen werden. Die radial innere und radial äußere Unterscheidung erklärt sich im Vergleich zu der Rotationssymmetrieachse, die zugleich den Mittelpunkt der Durchgriffsöffnung und den Mittelpunkt der die Durchgriffsöffnung als Ring umschließenden Stufenkontur darstellt.

Die Stufenkontur im Bereich der Durchgriffsöffnung für die Achse greift in die Stufennut in der Achse ein. Dabei verfügt die Stufennut über eine Basisnut, welche die Basiskontur der Stufenkontur aufnimmt. Außerdem ist die Stufennut mit einer Vorsprungnut für die Vorsprungkontur ausgerüstet. Entsprechend der topologischen Anordnung der Basiskontur radial außen der Stufenkontur und der Vorsprungkontur radial innen findet sich die Basisnut ebenfalls radial außen, wohingegen die Vorsprungnut radial innen angeordnet ist.

Erfindungsgemäß sind die Basiskontur und die Vorsprungkontur mit jeweils einer Schrägflanke ausgerüstet. Die Schrägflanke findet sich im Übergang von einer jeweils im Wesentlichen waagerechten Konturflanke zu einer im Wesentlichen senkrechten Konturflanke. Anders ausgedrückt, werden jeweils die Basiskontur und die Vorsprungkontur durch die im Wesentlichen waagerechte Konturflanke und die im Wesentlichen senkrechte Konturflanke definiert. Im Übergang von der waagerechten Konturflanke zur senkrechten Konturflanke findet sich die jeweilige Schrägflanke.

Zu der Schrägflanke korrespondiert eine Schrägaufnahme, die sich in der zugehörigen Stufennut und der Basisnut findet. Die in die Schrägaufnahme eingreifende Schrägflanke sorgt dafür, dass beim Übergang von der im Wesentlichen waagerechten Konturflanke zur im Wesentlichen senkrechten Konturflanke keine Spannungsspitzen bzw. Kerbspannungen und folglich Materialbrüche an dieser Stelle auftreten bzw. erst bei wesentlich höheren Belastungen als bisher beobachtet werden. Hierzu trägt ergänzend der Umstand bei, dass die Stufennut und die Basisnut mit einer im Wesentlichen Waagerechtaufnahme für die jeweils waagerechte Konturflanke und einer im Wesentlichen Senkrechtaufnahme für die senkrechte Konturflanke ausgerüstet sind. Die waagerechte Konturflanke und die senkrechte Konturflanke sind durch die Schrägaufnahme miteinander verbunden. Auf diese Weise erfahren sowohl die waagerechte Konturflanke als auch die senkrechte Konturflanke der Basiskontur und der Vorsprungkontur ebenso wie die Schrägflanke an der korrespondierenden Schrägaufnahme eine einwandfreie und größtenteils formschlüssige Abstützung.

Zur weiteren Vermeidung von Spannungsspitzen im Material und insbesondere im Schlossgehäuse im Bereich der Durchgriffsöffnung für die Achse bei insbesondere radialen Stoßbeanspruchungen trägt der weitere Umstand bei, dass die Basiskontur und die Stufenkontur eine in etwa gleiche radiale Länge aufweisen. Außerdem lässt sich durch diese Auslegung die Fertigung der Stufenkontur besonders einfach darstellen. Denn die Stufenkontur schließt üblicherweise mit im Wesentlichen gleicher Materialstärke an die Basiskontur an. Dabei ist die Stufenkontur in etwa um ein Drittel der Materialstärke gegenüber der Basiskontur in die Höhe versetzt. Das lässt sich im Rahmen eines gemeinsamen Fertigungsprozesses darstellen, weil die Stufenkontur und die Basiskontur typischerweise als Doppelsicke, insbesondere Runddoppelsicke, hergestellt sind.

Eine solche Sicke und insbesondere Doppelsicke, vorzugsweise Runddoppelsicke, kann sowohl manuell als auch maschinell hergestellt werden. Durch die erfindungsgemäß vorgesehene Stufenform bzw. die realisierte Stufenkontur werden in dem Schlossgehäuse zwei rinnenförmige Vertiefungen definiert, die jeweils als Kreisringe im Vergleich zu der gemeinsamen Rotationssymmetrieachse angeordnet sind. Auf diese Weise wird eine deutliche Erhöhung der Steifigkeit des Schlossgehäuses im Bereich der Duchgriffsöffnung für die Achse beobachtet und können radiale Beanspruchungen der Achse problemlos und ohne Materialrisse, Verschiebungen etc. aufgenommen werden.

Immer sorgt die in die Stufennut eingreifende Stufenkontur dafür, dass sich das Schlossgehäuse im Randbereich der Durchgriffsöffnung für die Achse gleichsam in der zugehörigen Stufennut verkrallt. Das gilt selbst unter Berücksichtigung der Tatsache, dass die Basisnut im Vergleich zur Stufennut radial (etwas) kürzer ausgelegt ist. Denn entscheidend ist der Umstand, dass die Winkelkonturen bzw. Stufenkonturen von einerseits der die Durchgriffsöffnung umringenden Stufenkontur im Schlossgehäuse und andererseits der Stufennut in der Achse miteinander form- und/oder kraftschlüssig verkeilt werden. Dadurch wird eine Steifigkeit im Bereich der Befestigung der Achse beobachtet, die bisher im Stand der Technik nicht erreicht werden konnte.

Wie bereits einleitend erläutert, handelt es sich bei der Achse im Regelfall um eine Drehfallenachse und/oder Sperrklinkenachse. Tatsächlich ist die betreffende Achse ebenso wie der die Achse aufnehmende Schlosskasten als Bestandteil des Schlossgehäuses mit der jeweils ineinandergreifenden Winkelkontur ausgerüstet. Die Drehfallenachse und/oder Sperrklinkenachse kann nietend mit dem Schlosskasten verbunden werden. Auch andere form- und/oder kraftschlüssige Verbindungen sind denkbar. Außerdem ist die Drehfallenachse respektive Sperrklinkenachse als im Wesentlichen zylindrischer Dorn ausgelegt.

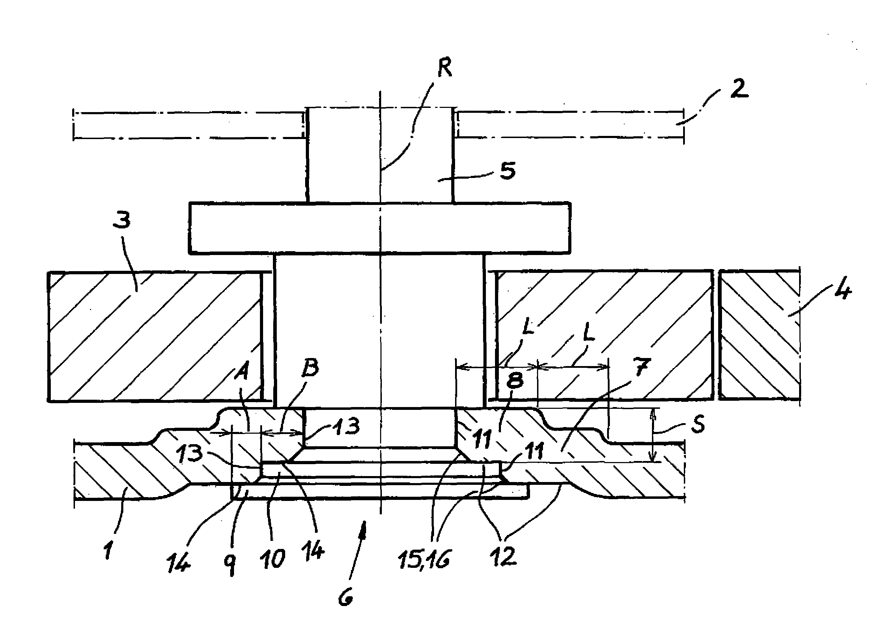

Im Folgenden wird die Erfindung anhand einer lediglich ein Ausführungsbeispiel darstellenden Zeichnung näher erläutert. Die einzige Figur zeigt einen Schnitt durch ein Kraftfahrzeugtürschloss im Bereich des Schlosskastens und der erfindungsgemäß gelagerten Drehfalle.

In der Figur ist ein auf seine für die Erfindung wesentlichen Elemente reduziertes Kraftfahrzeugtürschloss dargestellt, welches mit einem Schlossgehäuse 1, 2 ausgerüstet ist. Das Schlossgehäuse 1, 2 verfügt über einen zweigeteilten Aufbau mit einem metallischen Schlosskasten 1 und einer Kunststoffhaube 2. Die nachfolgenden Betrachtungen werden einzig und allein mit Blick auf den metallischen Schlosskasten 1 angestellt, lassen sich prinzipiell aber auch auf die Kunststoffhaube 2 bzw. beide Gehäusebestandteile 1, 2 übertragen. In dem Schlossgehäuse 1, 2 ist ein Hebel 3 gelagert, bei dem es sich im Beispielfall um ein Element 3 eines Gesperres 3, 4 handelt. Tatsächlich geht es primär um die Lagerung einer mit einer Sperrklinke 4 wechselwirkenden Drehfalle 3 in dem Schlosskasten 1.

Zu diesem Zweck ist eine Drehfallenachse 5 vorgesehen, die von einem zylindrischen Dorn 5 definiert wird. Gegenüber der Drehfallenachse bzw. dem Dorn 5 ist die Drehfalle 3 drehbar gelagert.

Der Dorn 5 durchgreift eine Durchgriffsöffnung 6 im Schlosskasten 1. Die Durchgriffsöffnung 6 für den Dorn bzw. die Drehfallenachse 5 wird erfindungsgemäß von einer Stufenkontur 7, 8 umringt. Die Stufenkontur 7, 8 greift in eine zugehörige Stufennut 9, 10 in der Achse bzw. den Dorn 5 ein. Dadurch sind sowohl der Schlosskasten 1 als auch die Achse bzw. der Dorn 5 mit korrespondierenden sowie ineinandergreifenden Winkelkonturen 11, 12; 13, 14 ausgerüstet. Diese Winkelkonturen 11, 12; 13, 14 stellen sich dadurch ein, dass einerseits die Stufenkontur 7, 8 mit einer im Wesentlichen senkrechten Konturflanke 11 und einer waagerechten Konturflanke 12 und andererseits die Stufennut 9, 10 mit einer zugehörigen Senkrechtaufnahme 13 und einer Waagerechtaufnahme 14 jeweils ausgerüstet sind. Darüber hinaus beobachtet man noch jeweilige Schrägflanken 15 im Übergang von der jeweils im Wesentlichen waagerechten Konturflanke 12 zur größtenteils senkrechten Konturflanke 11. Die jeweilige Schrägflanke 15 an der Stufenkontur 7, 8 greift in eine korrespondierende Schrägaufnahme 16 der Stufennut 9, 10 ein bzw. liegt an dieser an.

Die Stufenkontur 7, 8, die Durchgriffsöffnung 6 und die Stufennut 9, 10 sind ebenso wie der Dorn respektive die Achse 5 jeweils rotationssymmetrisch im Vergleich zu einer gemeinsamen Rotationssymmetrieachse R ausgebildet. Dabei setzt sich die Stufenkontur 7, 8 im Detail aus einer radial äußeren Basiskontur 7 und zumindest einer radial inneren Vorsprungkontur 8 zusammen. Die Stufennut 9, 10 verfügt über eine Basisnut 9, welche radial außen angeordnet ist und mit der Basiskontur 7 zusammenwirkt. Die radial innere Vorsprungkontur 8 wechselwirkt dagegen mit einer radial inneren Vorsprungnut 10 bzw. greift in diese Vorsprungnut 10 der Stufennut 9, 10 ein.

Man erkennt, dass die Basiskontur 7 und auch die Stufenkontur 8 über eine in etwa gleiche radiale Länge L verfügen. Demgegenüber ist die Basisnut 9 im Vergleich zur Vorsprungnut 10 kürzer ausgelegt. D. h., die Länge A der Basisnut 9 unterschreitet die Länge B der Vorsprungnut 10. Es gilt also A < B.

Die Vorsprungkontur 8 verfügt in etwa über die gleiche Materialstärke S wie die Basiskontur 7. Äußerem ist die Auslegung so getroffen, dass die Vorsprungkontur 8 in etwa um ein Drittel der Materialstärke S in die Höhe versetzt an die Basiskontur 7 anschließt. Sowohl die Vorsprungkontur 8 als auch die Basiskontur 7 werden typischerweise in einem gemeinsamen Fertigungsprozess, beispielsweise einem kombinierten Stanz-Tiefziehvorgang als Doppelsicke und insbesondere Runddoppelsicke hergestellt. Gleichzeitig wird bei diesem Vorgang die Durchgriffsöffnung 6 in dem Schlosskasten 1 definiert. Auf diese Weise wird die Drehfallenachse 5 respektive der an dieser Stelle realisierte Dorn gleichsam im Bereich der Durchgriffsöffnung 6 mit dem Schlosskasten 1 verkrallt, so dass der Schlosskasten 1 im Bereich dieser Durchgriffsöffnung 6 über eine bisher im Stand der Technik nicht erreichte Steifigkeit verfügt bzw. entsprechende Steifigkeiten bis dato nur mit aufwendigen Zusatzmaßnahmen erreicht werden konnten.

## Patentansprüche

1. Kraftfahrzeugtürschloss, mit einem Schlossgehäuse (1, 2), und mit wenigstens einem im Schlossgehäuse (1,2) gelagerten Hebel (3, 4), wobei zur Lagerung des Hebels (3, 4) zumindest eine im Schlossgehäuse (1, 2) verankerte Achse (5) vorgesehen ist, wobei das Schlossgehäuse (1, 2) und die Achse (5) korrespondierende sowie ineinandergreifende Winkelkonturen (11, 12; 13, 14) aufweisen, wobei das Schlossgehäuse (1, 2) mit einer eine Durchgriffsöffnung (6) für die Achse (5) umringenden Stufenkontur (7, 8) in eine zugehörige Stufennut (9, 10) in der Achse (5) eingreift, **dadurch gekennzeichnet, dass** die Stufenkontur (7, 8) eine radial äußere Basiskontur (7) und zumindest eine radial innere Vorsprungkontur (8) aufweist, wobei eine Stufennut (9, 10) mit einer die Basiskontur (7) aufnehmenden radial äußeren Basisnut (9) und einer radial inneren Vorsprungnut (10) für die Vorsprungkontur (8) ausgerüstet ist und die Basiskontur (7) und die Vorsprungkontur (8) der Stufenkontur (7, 8) mit jeweils einer Schrägflanke (15) im Übergang von einer jeweils im Wesentlichen waagerechten Konturflanke (12) zur im Wesentlichen senkrechten Konturflanke (11) ausgerüstet sind und die Basisnut (9) und die Vorsprungnut (10) mit einer zur jeweiligen Schrägflanke (15) korrespondierenden Schrägaufnahme (16) ausgerüstet sind und die Basisnut (9) und die Vorsprungnut (10) eine im Wesentlichen Waagerechtaufnahme (14) für die jeweils waagerechte Konturflanke (12) und eine im Wesentlichen Senkrechtaufnahme (13) für die senkrechte Konturflanke (11) aufweisen.

2. Kraftfahrzeugtürschloss nach Anspruch 1, **dadurch gekennzeichnet, dass** die Stufenkontur (7, 8), die Durchgriffsöffnung (6) und die Stufennut (9, 10) ebenso wie die Achse (5) jeweils rotationssymmetrisch im Vergleich zu einer gemeinsamen Rotationssymmetrieachse (R) ausgebildet sind.

3. Kraftfahrzeugtürschloss nach einem der Ansprüche 1 und 2, **dadurch gekennzeichnet, dass** die Basiskontur (7) und die Stufenkontur (8) eine in etwa gleiche radiale Länge (L) besitzten.

4. Kraftfahrzeugtürschloss nach einem der Ansprüche 1 bis 3, **dadurch gekennzeichnet, dass** die Basisnut (9) im Vergleich zur Vorsprungnut (10) radial kürzer (A < B) ausgelegt ist.

5. Kraftfahrzeugtürschloss nach einem der Ansprüche 1 bis 4, **dadurch gekennzeichnet, dass** die Vorsprungskontur (8) mit im Wesentlichen gleicher Materialstärke (S) an die Basiskontur (7) anschließt, und zwar in etwa um ein Drittel der Materialstärke (S) in die Höhe versetzt.

6. Kraftfahrzeugtürschloss nach einem der Ansprüche 1 bis 5, **dadurch gekennzeichnet, dass** die Vorsprungkontur (8) und die Basiskontur (7) in einem gemeinsamen Fertigungsprozess als Doppelsicke, insbesondere Runddoppelsicke, hergestellt sind.

7. Kraftfahrzeugtürschloss nach einem der Ansprüche 1 bis 6, **dadurch gekennzeichnet, dass** das Schlossgehäuse (1, 2) zweigeteilt mit Kunststoffhaube (2) und metallischem Schlosskasten (1) ausgebildet ist, wobei der Schlosskasten (1) und eine Drehfallenachse (5) und/oder Sperrklinkenachse mit den ineinandergreifenden Winkelkonturen (11, 12; 13, 14) ausgerüstet sind.

8. Kraftfahrzeugtürschloss nach einem der Ansprüche 1 bis 7, **dadurch gekennzeichnet, dass** die Drehfallenachse (5) und/oder die Sperrklinkenachse form- und kraftschlüssig, beispielsweise nietend, mit dem Schlosskasten (1) verbunden sind.

9. Kraftfahrzeugtürschloss nach einem der Ansprüche 1 bis 8, **dadurch gekennzeichnet, dass** die Drehfallenachse (5) und/oder die Sperrklinkenachse als überwiegend zylindrischer Dorn ausgebildet ist.

## Claims

1. Motor vehicle door latch, with a latch housing (1, 2), and with at least one lever (3, 4) located in the latch housing (1, 2), whereby at least one axis (5) anchored in the latch housing (1, 2) is provided for to house the lever, whereby the latch housing (1, 2) and the axis (5) demonstrate corresponding and interlocking angular contours (11, 12, 13, 14), whereby the latch housing (1, 2) engages into a pertaining step groove (9, 10) in the axis (5) with a step contour (7, 8) encircling a gateway opening (6) for the axis (5), **characterized in that** the step contour (7, 8) demonstrates a radially external basic contour (7) and at least one radially internal protruding contour (8), whereby a step groove (9, 10) is equipped with a radially external basic groove (9) incorporating the basic contour (7) and a radially internal protruding groove (10) for the protruding contour (8) and the basic contour (7) and the protruding contour (8) of the step contour (7, 8) are equipped with an inclined edge (15) respectively in the junction from a primarily horizontal contour edge (12) respectively to a primarily vertical contour edge (11) and the basic groove (9) and the protruding groove (10) are equipped with an inclined mounting (16) corresponding to the respective inclined edge (15) and the basic groove (9) and the protruding groove (10) demonstrate a primarily horizontal mounting (14) for the respectively horizontal contour edge (12) and a primarily vertical mounting (13) for the vertical contour edge (11).

2. Motor vehicle door latch according to claim 1, **characterized in that** the step contour (7, 8), the gateway opening (6) and the step groove (9, 10) and the axis (5) are respectively designed in rotational symmetry compared to a common rotational symmetry axis (R).

3. Motor vehicle door latch according to one of the claims 1 and 2, **characterized in that** the basic contour (7) and the step contour (8) possess an approximately equal radial length (L).

4. Motor vehicle door latch according to one of the claims 1 to 3, **characterized in that** the basic groove (9) is radially shorter (A < B) compared to the protruding groove (10).

5. Motor vehicle door latch according to one of the claims 1 to 4, **characterized in that** the protruding contour (8) connects to the basic contour (7) of primarily the same material thickness (S), namely is displaced upwards to approximately one third of the material thickness (S).

6. Motor vehicle door latch according to one of the claims 1 to 5, **characterized in that** the protruding contour (8) and the basic contour (7) are manufactured in a common manufacturing process as a double bead, especially a round double bead.

7. Motor vehicle door latch according to one of the claims 1 to 6, **characterized in that** the latch housing (1, 2) is designed divided in two with a plastic hood (2) and a metallic latch housing (1), whereby the latch housing (1) and catch axis (5) and/or pawl axis are equipped with the interlocking angular contours (11, 12, 13, 14).

8. Motor vehicle door latch according to one of the claims 1 to 7, **characterized in that** the catch axis (5) and/or the pawl axis are connected positively and negatively, for example in a riveted manner, with the latch housing (1).

9. Motor vehicle door latch according to one of the claims 1 to 8, **characterized in that** the catch axis (5) and/or the pawl axis are designed as a predominantly cylindrical mandrel.

## Revendications

1. Serrure de portière de véhicule à moteur comportant un boîtier de serrure (1, 2) et au moins un levier (3, 4) logé dans le boîtier de serrure (1, 2), au moins un axe (5) ancré dans le boîtier de serrure (1, 2) étant prévu pour loger le levier (3, 4). Le boîtier de serrure (1, 2) et l'axe (5) présentant des contours angulaires (11, 12; 13, 14) qui se correspondent et s'encastrent l'un dans l'autre, le boîtier de serrure (1, 2) avec un contour à niveaux (7, 8) entourant une ouverture de passage (6) pour l'axe (5) s'engrenant dans une rainure à niveaux correspondante (9, 10) dans l'axe (5), **caractérisée en ce que** le contour à niveau (7, 8) présente un contour de base radial extérieur (7) et au moins un contour saillant radial intérieur (8), une rainure à niveaux (9, 10) étant équipée d'une rainure de base (9) radiale extérieure logeant le contour de base (7) et avec une rainure saillante radiale intérieure (10) pour le contour saillant (8) et le contour de base (7) et le contour saillant (8) du contour à niveaux (7, 8) étant équipés respectivement d'un flanc oblique dans la transition d'un flanc de contour (12) respectivement horizontal pour l'essentiel vers le flanc de contour (11) essentiellement vertical et la rainure de base (9) et la rainure saillante (10) étant équipées d'un logement oblique (16) correspondant au flanc oblique (15) respectif et la rainure de base (9) et la rainure saillant (10) présentant un logement horizontal (14) pour l'essentiel pour le flanc de contour horizontal (12) respectif et un logement vertical (13) pour l'essentiel pour le flanc de contour vertical (11) respectif.

2. Serrure de portière de véhicule à moteur selon la revendication 1 **caractérisée en ce que** le contour à niveaux (7, 8), l'ouverture de passage (6) et la rainure à niveaux (9, 10), tout comme l'axe (5), sont formés respectivement à symétrie de révolution par rapport à un axe à symétrie de révolution (R) commun.

3. Serrure de portière de véhicule à moteur selon l'une des revendications 1 et 2 **caractérisée en ce que** le contour de base (7) et le contour à niveaux (8) possèdent une longueur (L) radiale pratiquement égale.

4. Serrure de portière de véhicule à moteur selon l'une des revendications 1 à 3 **caractérisée en ce que** la rainure de base (9) par rapport à la rainure saillante (10) est conçue radialement de façon plus courte (A < B).

5. Serrure de portière de véhicule à moteur selon l'une des revendications 1 à 4 **caractérisée en ce que** le contour saillant (8) se raccorde pour l'essentiel de même épaisseur de matériau (S) au contour de base (7) et ce, décalé en hauteur d'environ un tiers de l'épaisseur de matériau (S).

6. Serrure de portière de véhicule à moteur selon l'une des revendications 1 à 5 **caractérisée en ce que** le contour saillant (8) et le contour de base (7) sont fabriqués en un processus de fabrication commun comme double moulure, en particulier double moulure ronde.

7. Serrure de portière de véhicule à moteur selon l'une des revendications 1 à 6 **caractérisée en ce que** le boîtier de serrure (1, 2) est formé en deux parties avec capot plastique (2) et boîte de serrure métallique (1), la boîte de serrure (1) et l'axe de pêne (5) et/ou axe de cliquet d'arrêt étant équipés des contours angulaires (11, 12, 13, 14) qui s'encastrent l'un dans l'autre.

8. Serrure de portière de véhicule à moteur selon l'une des revendications 1 à 7 **caractérisée en ce que** l'axe de pêne (5) et/ou l'axe de cliquet d'arrêt sont associés à la boîte de serrure (1) par coopération de formes et de forces, par exemple par rivetage.

9. Serrure de portière de véhicule à moteur selon l'une des revendications 1 à 8 **caractérisée en ce que** l'axe de pêne (5) et/ou l'axe de cliquet d'arrêt sont formés comme mandrin essentiellement cylindrique.
